# EUROPEAN PATENT SPECIFICATION

(11) **EP 4 391 471 B1**
(45) Date of publication and mention of the grant of the patent: **17.09.2025**
(21) Application number: 22214525.2
(22) Date of filing: 19.12.2022
(51) Int. Cl.: H04L 41/0806, H04L 67/00, H04L 67/12, H04L 9/40

(54) **SYSTEM AND METHOD FOR PROVISIONING AND REGISTRATION OF A DEVICE WITH AN ENERGY- OR POWER SYSTEM**
SYSTEM UND VERFAHREN ZUR BEREITSTELLUNG UND REGISTRIERUNG EINER VORRICHTUNG MIT EINEM ENERGIE- ODER STROMVERSORGUNGSSYSTEM
SYSTÈME ET PROCÉDÉ DE FOURNITURE ET D'ENREGISTREMENT D'UN DISPOSITIF AVEC UN SYSTÈME D'ÉNERGIE OU D'ALIMENTATION

(43) Date of publication of application: 26.06.2024
(73) Proprietor: Hitachi Energy Ltd, 8050 Zürich (CH)
(72) Inventor: DECK, Bernhard, 79809 Weilheim (DE); DAN, Andrei-Marian, 8112 Otelfingen (CH); REJIBA, Zeineb, 8064 Zurich (CH); EIDENBENZ, Raphael, 8049 Zürich (CH)
(74) Representative: Vossius & Partner Patentanwälte Rechtsanwälte mbB

(56) References cited:
- US-A1- 2016 285 628
- US-A1- 2022 386 124

## Description

The present invention relates to systems and methods for provisioning and registration of devices with an energy- or power system, particularly to systems and methods for location-aware provisioning of such devices.

Location information for installed products is key for fleet management in the energy- and power systems industry. However, although most devices/assets have a fixed location after they are installed, the location information is often not available to the device owner.

Moreover, particularly for systems consisting of many devices that must be connected to a server, zero-touch configuration has been considered. The zero-touch configuration enables the automatic detection, connection, and configuration between the new devices and a system server. Once the new device is connected to the network, the zero-touch configuration protocols identify the server address, establish a connection to the server, and receive from the server the necessary configuration data.

For example, US 9,854,391 B2 discusses zero touch configuration support for a universal serial bus (USB) modem. An identifier of a modem connected to an access point may be determined. Location information corresponding to the access point may also be determined. Based on the identifier of the modem and the location information, the access point may select a particular configuration, for the modem, where the particular configuration is suitable for a geographical location associated with the location information.

US 2021/0120412 A1 discloses an internet of things ("loT") device that can be authenticated on a wireless local area network ("WLAN") without human intervention. The loT device can also authenticate itself with a network service without human intervention. In order to enable this functionality, data identifying a service set identifier ("SSID") used by the WLAN, a digital certificate for use in authenticating on the WLAN, and a digital certificate for use in authenticating with a network service are stored in the loT device at the time it is manufactured. The digital certificate for authenticating on the WLAN is stored at an authentication server and information about the digital certificate for use in authenticating with the network service is stored at the network service. The loT device can use the SSID to connect to the WLAN and use the digital certificates to authenticate with the authentication server and the network service, respectively.

CN 101 951 341 B provides a server physical position marking method, equipment, and system. The method comprises the following steps: a switchboard receives a configuration request sent by a server; the switchboard generates physical position information of the server according to information of a port for receiving the configuration port and preset physical position information of the pre-configured switchboard; and the switchboard packages the physical position information of the server in the configuration request and forwards the configuration request to configuration equipment so that the configuration equipment can identify a physical position of the server. Hence, the cost and the workload for marking the physical position of the server can be reduced, and the success rate for marking the physical position of the server can be improved.

US 11,212,710 B1 A relates to an apparatus, computer-readable medium, and method for generating and applying a value for a configuration parameter to a new carrier in a cellular network in accordance with a collaborative filtering. It discloses examples which automatically determine initial configuration parameter values for new carriers added in cellular networks. This enables zero-touch configuration for new carriers. In particular, there is no requirement to manually create and maintain a rulebook for configurations.

US 2021/0168125 A1 provides a method of separating identity IPs for identification of applications from the locator IPs for identifying the route. A virtual service layer (VSL) protocol stack uses the IP addresses assigned by network administrators to the application endpoints to support the TCP/IP stack as the identity IP addresses that are not published to the underlay network for routing. On the other hand, the VSL stack uses the IP addresses assigned by the underlay network to the VSL enabled endpoints and VSL enabled routers as the locator IP addresses for routing packets. The VSL stack formats application flow packets with identity headers as identity packet and encapsulates identity packet with the locator header to route the packet. The separation of the identity and locator identifications are used to eliminate the network middleboxes and provide firewall, load balancing, connectivity, SD-WAN, and WAN-optimization, as a part of the communication protocol.

US 2022/0386214 A1 discloses a method of signing a certificate, comprising: receiving, by a controller application, a first authentication code from the controller, responsive to the controller validating a device identified in a certificate signature request from the device; establishing, by the controller application responsive to receiving the first authentication code, a short-range wireless connection with the device within a pairing range of the controller application using at least one of one or more short-range wireless communication types; receiving, by the controller application, a second authentication code from the device via the short-range wireless connection; determining, by the controller application, the first authentication code received from the controller corresponds to the second authentication code received via the short-range wireless connection; and transmitting, by the controller application responsive to determining that the first authentication code corresponds to the second authentication code, an approval request to the controller to sign a certificate for the certificate signature request to authorize the device to communicate with the controller.

US 2016/0285628 A1 discloses a method for provisioning a networked device to enable and support authenticated access by the networked device to a data collection and processing server. A network connection is established with the networked device. A fully qualified domain name and a public key for the networked device is received from the networked device. The hilly qualified domain name and the public key are registered with a domain name server (DNS). Configuration data, including data corresponding to a username, is transmitted to the networked device. The username enables the networked device to establish an authorized connection with a data collection server that is accessible, via a network, to the networked device. The networked device is now provisioned and ready to periodically connect to a data collection and processing server to download collected data.

However, current zero-touch configuration protocols are not optimized for provisioning and registration of devices, in particular, with an energy- or power system.

The above-outlined problems and drawbacks of the prior art are addressed and at least partially solved by the different, but combinable, aspect of the present invention.

According to a first aspect, a method of provisioning and registration of a device with an energy- or power system is provided.

The device (often also called an "asset" in the pertinent art) may be any device that needs to be provisioned and/or registered with an energy system or power system for operation in the system, such as, e.g., an Intelligent Electronic Device (IED), an Internet-of-Things (IoT) Sensor; a non-intelligent asset or component like a circuit breaker, bushing, transformer, IGBT; a communication device like a modem, router, gateway.

The kinds of energy systems or power systems pertinent to the present disclosure are generally not limited in any way, but particular examples of energy-/power systems the present disclosure may be applied to include substations, drives, control cubicles for protection and control. The present disclosure may also have applications for communication and processes in the oil and gas industry, as well as applications in transportation, for example. These statements also apply to all other aspects and embodiments of the present disclosure which are discussed in the following, even if the fact is not explicitly repeated again.

The invention is defined by a method according to claim 1 and a system according to claim 14. Further embodiments are set out in the dependent claims.Accordingly, the method comprises pre-registration of the device with the energy- or power system, as well as provisioning of the device and further registration of the device with the energy- or power system, wherein pre-registration of the device with the energy- or power system comprises the steps of: 1a.) an operator authenticating themselves with the energy- or power system, 1b.) the operator obtaining identification information about the device, preferably by scanning a code on the device, 1c.) the operator obtaining information about a location of the device, preferably based on a GPS signal, and 1d.) the operator pre-registering the device with a location-aware provisioning server, LAP server, of the energy- or power system, wherein pre-registering the device with the LAP server comprises sending a message to the LAP server that contains the identification information about the device and the location of the device.

Besides the actual physical installation of a new device at its installation site, installing a new device with modern-day energy- or power systems usually includes registration of the device with the system, to "make the device known" to the system, and provisioning of the device, which may include setting up the network capabilities of the device and providing the device with (initial) configuration data, in order to enable the device to commence operations in the system.

One particular item of interest to the present disclosure is a part of the registration process herein referred to as "pre-registration", which according to the disclosed method addresses both security- and localization issues. By requiring the operator, in step 1a.), to authenticate him- or herself (in the following often simply "themselves", for brevity) with the system before obtaining the identification information and the location information and providing that information to the system, unauthorized tampering with or intrusion into the system can be avoided, or at least be made more difficult. Moreover, by providing information not only about the identity but also about the location of the device already during pre-registration, the above-discussed need to have this information available in modern systems is automatically "built in" into the disclosed procedure of registering and provisioning of the device. In addition, the location information can also be used to further improve the security and robustness of the method against unauthorized uses or attacks, as will be discussed in further detail below.

For example, to already anticipate in parts what will be discussed in more detail below, and to help the understanding of the present disclosure, one embodiment of the disclosed method may take the following form: During pre-registration, which may be performed during or directly after the physical installation of the device by a responsible operator who is present on site, the operator authenticates him- or herself with the system, for example, in a fleet management system of the energy-/power system, by using a registered and/or authenticated mobile device or application (e.g., an application running on a mobile phone, tablet, laptop, etc.). Next, the operator pre-registers the newly installed device with the system using the mobile device/application, which includes providing identification information about the device to the system, and sends to the system the location of this new device. During the subsequent configuration of the device (e.g., using a zero-touch protocol), the device establishes a connection to an LAP server of the system and the LAP server checks two properties: (1) that the device has been pre-registered by an authorized operator, and (2) that the location information is available. If both properties are satisfied, then the system continues to configure the device (e.g., using the zero-touch protocol). In this manner, the method ensures that the location information is available for all new devices, and that the new device is not an unregistered device or an intruder.

Step 1a.) of the operator authenticating themselves with the system may take different forms, for example, entering a username and password, using two-factor-authentication methods, using biometric data (e.g., fingerprint(s), eye scans, etc.), or other ways to sign in on a device or application that provides the capabilities to authenticate the user with the system, e.g., with a fleet management server and/or an LAP server of the system (both of which will be discussed in more detail below). Authenticating themselves with the system may also involve the use of a "trusted" device which is known to the system and has been marked by the system as eligible for performing user authentication.

Step 1b.) of obtaining identification information about the device may involve, as mentioned, scanning a code on the device which encapsulates the identification information and/or which leads to an information source (e.g., a database, a website, etc.) where the relevant information can be retrieved. The code can, for example, be a bar code, a QR-code, or any other code known in the art, particularly a code that can be read and processed by handheld devices like mobile phones and tablets. The identification information may also be stored on an RFID chip and be obtained via reading out this chip, or it may be obtained via a Bluetooth connection, etc. At least as far as such automatic methods of retrieval of the identification information are concerned, they may require prior authentication of the operator as per step 1a.), to gain access to the information. However, the operator may also manually read off and then enter the identification information, e.g., from a label attached to the device. Or a combination of automatic and manual retrieval of the identification information may be used. The obtained identification information may simply comprise an identifier (e.g., a number, a name, an alphanumerical code, etc.), which preferably allows the system to unambiguously identify the concerned device. However, the identification information may also comprise additional information, like device type, manufacturer, hardware version, firmware version, and so forth. The identification information can also include or be provided as a picture of the device or of a part of the device that is taken by the operator.

Obtaining location information in step 1c.) may comprise the operator manually entering the position of the device, which may be particularly useful for indoor installation sites where automatic localization methods like GPS may be unavailable or unreliable. The device location may be entered in "absolute values", e.g., longitude and latitude, and possibly altitude, or in "relative values", e.g., by giving a common street address, which may then be translated into an absolute address by the system, by suitable methods known in the art. However, automatic localization methods, particularly using GPS, Galileo, GLONASS, or another such system, may also be used, particularly if the method involves the use of a mobile phone or tablet or the like (s. also the corresponding discussion that follows below), which nowadays usually provide such services with a comparatively high degree of accuracy. Both approaches, manual and automatic, may also be combined, e.g., by checking both locations against one another and issuing a warning if there is a difference between the two that is larger than a certain predetermined threshold, e.g., a difference of more than 1m, or 2m, or 5m or, 10m, or 20m. In case a mobile device and/or an application running on the mobile device is involved in obtaining the location information, the mobile device's/application's accuracy regarding the location information can also be indicated. An algorithm may be checking if the accuracy is further improving while being at the same position. Moreover, the operator may, alternatively or additionally, take a picture of the device as part of the information obtained about the device in the pre-registration process (as also further discussed elsewhere in the present document). The camera used to do this may at the same time obtain location information about the site where the picture is taken, and the accuracy of the location information obtained by the camera may also be indicated.

It is noted that steps 1b.) and 1c.) need not be performed in any particular order, i.e., step 1b.) may be performed before or after step 1c)., and both steps may also happen (at least partly) concurrently.

Step 1d.) of pre-registering the device with the system may proceed largely or fully automated once the operator has obtained and, optionally, confirmed the required data, particularly the identification information (potentially including, e.g., visual information, like a picture taken of the device and/or information derived from such a picture) and the location information. The message to the LAP server containing these two pieces of information may preferably be encoded, by suitable encoding schemes known in the art, to be protected against unauthorized use. The format of the message itself (e.g., the original unencoded message) may dependent on the system- and server structure employed by the energy- or power system. Common formats known in the art, like HTML or XML, are one possible option.

The possibility of including in the disclosed method, alternatively or additionally, the step of obtaining an indication of a location accuracy, and optionally an indication if the location accuracy is sufficient, is once again highlighted, as is the possibility of taking an image of the asset/device and using this information in the pre-registration process.

The steps of provisioning and further registration of the device may mean connecting the device with the system via a network connection (e.g., a wired- or wireless connection), and providing all further information from the device to the system and from the system to the device via this connection that is necessary to fully register the device with the system and allow regular operation of the device within the system. However, specific details and options about the provisioning and further registration that advantageously combine with the disclosed method as discussed above will be described in the following, which hence further contribute to the solution of the above-mentioned drawbacks of the prior art.

More generally (i.e., not only in relation to the provisioning and further registration of the device), further possible options, features and embodiments of the disclosed method will now be discussed. These options, features and embodiments may also be combined with one another even if such combinations are not explicitly mentioned, unless explicitly stated otherwise or ruled out technically or by some law of nature. The order in which the following discussion is presented is also not intended to limit the scope of the disclosure, unless some feature explicitly depends on or necessitates the presence of another feature mentioned prior to it. Individual features or sub-features may also be omitted without departing from the scope of the present disclosure, if deemed dispensable to achieve a given technical goal or effect.

Steps 1a. to 1d. of the pre-registration can be performed using a mobile device of the operator, particularly a mobile app running on the mobile device of the operator and/or a web application accessed via the mobile device of the operator.

As already hinted at, the mobile device can be a "standard" mobile device, like a mobile phone or a tablet, which is also used by the operator for other purposes, but which provides the necessary capabilities or interface for the operator to authenticate themselves with the system and to perform the steps 1a. to 1d. of the pre-registration process, and, optionally, also of the provisioning and further registration of the device. For this purpose, an app running on the mobile device and/or a website or web interfaced accessed, e.g., via a web browser running on the mobile device may be used. The mobile device may, however, also be a dedicated device provided to the operator specifically for the purpose of performing registration and provisioning of new devices with the energy/power system, which may add a level of security compared to using a standard, general-purpose device like a mobile phone or tablet.

The method can further comprise physical installation of the device at an installation site by the operator. The physical installation can be performed prior to or during pre-registration of the device.

Since providing information about the location of the device is part of the pre-registration process, the location should preferably stay fixed from the point in time that the pre-registration process is initiated. It is hence preferable that physical installation of the device occurs prior to, or at the latest during pre-registration of the device. In case the location of the device does have to be changed again, the device could, e.g., be registered and provisioned anew, or the location information could be updated, as will be discussed farther below.

Provisioning of the device and further registration of the device with the energy- or power system can comprise the steps of connecting the device with a network, and initiating, by the device, the provisioning of the device through the LAP server. Preferably, initiating the provisioning involves initiating a zero-touch provisioning protocol on the LAP server.

As mentioned, provisioning of a device may comprise (at least) setting up the network capabilities of the device and establishing a (permanent) network connection with the device, so that the device can be configured with the necessary operating parameters via the network, since performing these steps manually (e.g., by the operator) is very cumbersome, particularly considering that modern energy- and power systems usually comprise a large number of devices that would have to be configured in this manner. The use of zero-touch provisioning protocols which work (essentially) without human participation or intervention are therefore particularly apt for configuring such systems and devices and can result in a significant reduction in effort and time.

For establishing the (initial) network connection with the device, several options are possible, which will now be discussed. It is pointed out that once the device has been provisioned and configured and/or already during this process, the network configuration may also be changed again, e.g., by switching to a network configuration for regular operation of the device in the system which may, e.g., add further levels of security to the connection, compared to the initial configuration.

(Initially) connecting the device with the network may comprise establishing a connection of the device with a default IP-address.

The default IP-address may be the same for all devices that are newly added/installed in the energy/power system, and this default IP-address may be set by and/or refer to the LAP server and/or a fleet management server of the system. Correspondingly, the device may (initially) connect with the LAP server and/or fleet management server via the default IP-address. However, the default IP-address may also depend, e.g., on the device type or device class, meaning that different types or classes of devices may connect to different default IP-addresses. The default IP-address may be known to the device prior to being installed and pre-registered in the system (it may, e.g., be stored within the device during manufacture of the device), or it may be provided to the device prior to or during pre-registration (e.g., the operator may inform the device of the default IP-address to connect with, e.g., using the operator's mobile device and a suitable connection to the device being installed, e.g., a USB connection or Bluetooth connection or the like).

Alternatively to connecting with a default IP-address, (initially) connecting the device with the network may comprise the steps of the LAP server providing the identification information about the device to a factory server of a manufacturer of the device, the LAP server receiving in response thereto connection information for the device from the factory server, and the LAP server establishing a connection with the device using the connection information received from the factory server.

As mentioned, the identification information provided to the LAP server during pre-registration preferably allows for a unique identification of the device, so that given this information the LAP server may query a database, particularly a database of the manufacturer of the device, for connection information that allows setting up and establishing an initial (wired or wireless) connection with the device. For example, upon manufacture, the manufacturer may pre-configure the device with connection information that is stored in the database and that may be retrieved and then used by the LAP server to establish an (initial) network connection with the device (wired or wireless), once the LAP server is in possession of the identification information about the device. The procedure may further be safeguarded against unauthorized use or intruders by use of suitable technique known in the art, e.g., encryption methods or digital certificates.

In principle, a fleet management server could also be involved in this process, e.g., by first obtaining the identification information from the LAP server and then performing the querying of the manufacturer's database, whereupon the fleet management server could establish the connection to the device or provide the retrieved information back to the LAP server to establish the connection to the device.

Moreover, the possibility of obtaining an indication of a location accuracy, and optionally an indication if the location accuracy is sufficient, and the possibility of taking an image of the asset/device and using this information in the pre-registration process is mentioned again, as these options may also be combined with or included in the process described here of employing a factory server for establishing a network connection.

Initiating the provisioning may comprise sending, by the device, identification information about itself to the LAP server via the network, checking, by the LAP server, whether the device has already been pre-registered by an authorized operator, and, if the device has not been pre-registered by an authorized operator, cancelling the provisioning of the device.

Once a network connection has thus been established with the device, this connection may be used by the system, particularly the LAP server, for the further configuration/provisioning and registration of the device, meaning that the necessity for further human intervention or involvement (e.g., by the operator) can be reduced or even completely be eliminated. By only proceeding with the provisioning if the pre-registration has been successfully performed, the danger of abuse of the system by intruding devices is eliminated or at least reduced.

It is important to note that the identification information about itself, which is sent by the device to the LAP server via the network for initiating the provisioning, may be the same identification information that is obtained by the operator in step 1b.) and that is sent to the LAP server as part of the message in step 1d.). However, the identification information about itself sent by the device to the LAP server via the network may also be a (true) subset, or a (true) superset of the identification information of steps 1b.) and 1d.). That is to say, the device may provide the LAP with the same information, with less information, or with additional information about itself compared to the information contained in the message sent to the LAP server in step 1d.). Moreover, the two sets of identification information may also contain different pieces of information with some common overlap (e.g., an ID-code or the like contained in both sets of information), and it is even possible the two sets of identification information are completely disjunct, meaning that they each contain information the other one does not contain (although this may be less preferred, because it could make it more difficult to associate them with the same device).

To give just one illustrative example, during pre-registration, the operator may obtain as identification information about the device in step 1b.) simply an ID-code, or the like, that allows for a unique identification of the device among all the devices in the energy- or power system, and that ID-code is then sent to the LAP server as part of the message in step 1d.). For initiating the provisioning, on the other hand, the device may send to the LAP server more detailed identification information about itself, preferably also including the ID-code, e.g., including additional identification information like the device type, the manufacturer, operating parameter values, and/or its network/communication capabilities, and so forth.

Once again, the possibility of obtaining an indication of a location accuracy, and optionally an indication if the location accuracy is sufficient, and the possibility of taking an image of the asset/device and using this information in the pre-registration process, is mentioned.

Initiating the provisioning may further comprise: checking, by the LAP server, whether information about the location of the device is available, and if no information about the location of the device is available, cancelling the provisioning of the device.

This option takes account of the fact mentioned in the beginning that location information is nowadays an important piece of information for successful fleet management that has often been neglected in the art, by only proceeding with the provisioning if this information has been provided, it is thus ensured that all fully provisioned and registered devices in the system have provided that information to the system.

To further add to this advantage of the present invention, initiating the provisioning may additionally comprise: validating, by the LAP server via a fleet management server, that the identification information about the device and the information about the location of the device are valid, wherein preferably the validating involves verifying that an installation of a device of the given type is expected at the site specified by the information about the location of the device. If the validation fails, the provisioning of the device is cancelled.

To enable validation that the installation of a device of the given type is expected at the site specified by the information about the location of the device, the identification information provided to the LAP server in step 1d. and/or by the device for initiating its provision preferably includes information about the device type. Moreover, besides the mentioned option of validating that the installation of a device of the given type is expected at the specified location, the fleet management server can also contain more "fine-grained" information about expected installation details regarding device IDs, device types, device locations, etc., that can be used in the validation process.

Once provision has been initiated by the device and assuming the provisioning procedure has not been cancelled, particularly due to one of the conditions discussed above, the LAP server can configure the device, particularly by using the already-mentioned zero-touch provisioning protocol.

Using the zero-touch provisioning protocol may comprise the following steps: identifying an address of the LAP server, establishing a connection between the device and the LAP server, and receiving, by the device, configuration data from the LAP server, wherein these steps are performed automatically without human intervention.

The steps of identifying the address of the LAP server and establishing a connection between the device and the LAP server may be skipped or foreshortened if a connection between the device and the LAP server has already been established (e.g., by using a default IP-address or by querying a manufacturer's database as discussed above; or by some different method). However, even in such a case, a new network connection may still be established for performing the zero-touch provisioning and configuration of the device, e.g., a connection with better security compared to the initial connection.

Turing now to the further configuration of the device, the further registration of the device with the energy- or power system may comprise: sending, by the LAP server, data about the successfully registered device and its location to a fleet management server, preferably including at least the identification information and the information about the location of the device.

In contrast to the LAP server, which may predominantly be responsible for managing the installation of new devices in the energy- or power system, the fleet management server may predominantly manage the fleet of devices or assets of the system during regular operation and once they have been successfully provisioned and registered with the system (even though the fleet management server may also be involved in the (pre-)registration and provisioning process). The LAP server may therefore forward the identification- and location information it has obtained about the device during the pre-registration and/or provisioning stages, so that the fleet management server/fleet management system of the energy- and power system can utilize this information for management of the fleet.

Management of the fleet by the fleet management server/fleet management system of the energy- and power system may, for example, comprise using a database with a dashboard to visualize the fleet through different viewing options and filters applying data mining. The fleet management server can be located on the premises and/or in the cloud. The fleet management system can also provide secure interfaces to connect tools for data analysis and engineering. It can also provide remote interfaces to the suppliers of the assets, for example, to receive software updates or product information.

A particular advantage of the disclosed method is, that the method may be provided "as-a-service" on existing infrastructure.

In other words, the method can augment the functionalities of existing systems in the manner described herein and with the corresponding advantages disclosed herein, without necessitating a modification of the (hardware) infrastructure of the systems.

Step 1c. of the operator obtaining information about a location of the device can further comprise the steps of obtaining information about a quality of the information about the location of the device and storing the information about the quality of the information about the location of the device.

For example, during (pre-)registration and provisioning, it may be validated that the installation of a device of the given type is expected at the specified location to allow provisioning of the device, as already discussed above. By not only storing information about the location, but also about the quality or (expected) accuracy of the location information, a decision whether or not to proceed with the provisioning of the device can be facilitated, if, e.g., the information about the location of the device and the location of an expected installation site of such a device do not match. In such a case, if the quality or accuracy of the provided location information about the device is high, the provisioning may be cancelled, while if the quality or accuracy is low, the device might still be provisioned because it may be concluded that the mismatch is due to a measurement error regarding the location of the device, and not to an actual difference between the device location and the expected installation site. Moreover, the information about the quality of the location information may be used in conjunction with the information about the location of the device not only to validate a request for provisioning, but also in other stages of the registration and provisioning process, or later on for fleet management and maintenance operations, in a similar manner as discussed above, or in some different manner.

The information about the quality of the information about the location of the device can, for example, be stored in one or more of the following forms: a color code indicating a low, medium, or high quality of the information about the location of the device, and/or a value in meters indicating an accuracy of the information about the location of the device.

Storing the accuracy in the form of a color code may allow for a particularly intuitive representation to an operator or a maintenance personnel of the system (e.g., during maintenance operations, when looking for the location of the device), while storing the accuracy in a numerical format, e.g. in terms of meters (or yards, feet, etc.), may be particularly useful for further automated processing, e.g., in a process as described above.

The information about the location of the device may alternatively or additionally use a location format that allows for a coordinate-to-address conversion that enables fine-grained filtering capabilities, particularly filtering for one or more of the following: street name, intersection, locality.

As already mentioned above, the information about the location of the device may, e.g., be provided in terms of a street address, particularly if entered "manually" by the operator. This may be beneficial for maintenance operations, so that a maintenance personnel can easily find the installation site of the device. However, for automatic methods of determining and obtaining the information about the location of the device, e.g., satellite-based methods as GPS, GLONASS or Galileo, the information may per se not be in a "human-readable" format but given as "absolute values", e.g., latitude, longitude, and possibly altitude. In such cases, it is preferable if the location information is provided or formatted into a form that allows a coordinate-to-address conversion, e.g., using suitable methods for this purpose that are known in the art and available on the internet, so that filtering for a street name, intersection, locality, etc., may be possible which may be more useful to human users as longitude/latitude values.

The method may further comprise the steps of: the LAP server marking each pre-registered device that was already successfully configured (particularly, successfully configured using the zero-touch provisioning protocol), the LAP server detecting that a new device uses the same identification information as an already-configured device, and the LAP server emitting a warning in response to the detecting that the new device uses the same identification information as an already-configured device.

This approach, particularly for the case that the identification information about the device allows for a unique identification of each device added to the system and that (at least) this information is used by the LAP server to mark each pre-registered device that was already successfully configured, adds a further level of security to the registration and provision process that happens "early" in the process when the new and potentially intruding device has not yet been too deeply integrated into the system. The attack can thus be fended off, or at least the potential harm caused by an attempt for intrusion be limited. Also, management and maintenance of the energy/power system can be facilitated, as it can be ensured that each added device remains uniquely identifiable. All of this only applies, of course, if the warning is not ignored and two devices with the same identification information are not installed to the system despite the warning.

After successful registration of the device with the energy- or power system, a person (e.g., a system administrator or maintenance personnel) may furthermore authenticate themselves with the energy- or power system via a mobile device of the person (particularly by using a mobile app running on the mobile device of the person and/or a web application accessed via the mobile device of the person), and, by using the mobile device of the person, identification information about the device may be obtained, preferably by scanning the code on the device. The identification information may then be sent to the LAP server and/or the fleet management server, and in response thereto stored information about the location of the device may be received. Again, by using the mobile device of the person, up-to-date information about a current location of the device may furthermore be obtained, and the up-to-date information about the current location of the device may be compared with the obtained stored information about the location of the device. If the comparison yields a difference above a predetermined threshold value, the person may be prompted to indicate whether the stored information about the location of the device shall be updated, and, if the indication is that the information shall indeed be updated, the stored information about the location of the device may be updated with the up-to-date information about the current location of the device.

This approach (which represents an independent aspect of the present disclosure and may hence also be used and claimed independently of and/or in combination with the other disclosed features of the first aspect of the present invention), allows keeping the system and, in particular, the location information about the installed devices up-to-date without having to run through the entire (pre-)registration and provisioning process again. In the manner, the coupling of the (preferably unique) identification information to the location information that is intrinsic to the disclosed pre-registration process (cf., e.g., steps 1b.) to 1d.) of the disclosed method) may advantageous be utilized.

As already indicated, use of the disclosed method in an energy- or power system that comprises a large number of devices, for example at least 100 devices, or even at least 1000 devices, is a particularly preferred field of application, as in such systems that large degree of automatization that may be invoked after the pre-registration process has been concluded by the operator on-site (which only involves a comparatively small number of rather simple steps) can advantageously be exploited, particularly when the option of using zero-touch provisioning protocols is invoked.

The identification information about the device can also be divided into two parts, wherein a first part of the identification information is provided to the LAP server during pre-registration in the message to the LAP server that contains the identification information about the device and the information about the location of the device, and wherein a second part of the identification information is provided to the LAP server by the device via the network during initiating the provisioning. The provisioning of the device only proceeds when the two parts match.

Above, it was already discussed that the identification information provided during pre-registration in the message (from the operator) to the LAP server and the identification information provided to the LAP server by the device itself do not need to be necessarily identical. Actually, distributing or splitting up the complete set of identification information into two parts, as now discussed, can add yet another level of security to the (pre-)registration and provisioning procedure, because if only one part is tampered with, the two parts will generally no longer match.

For example, the first part of the identification information (and/or the second part of the identification information) may include or consist of a picture of the device (or of a part of the device) that is taken by the operator and provided to the LAP server during pre-registration.

The form of the match between the two parts may take different forms. A match may, for example, be determined if a serial number provided by the device over the network and decoded by the LAP server matches with a photo including the serial number that is taken of the device and provided to the LAP server by the operator during pre-registration. Or a match is determined if the serial number decoded by the LAP matches with the ordering code of the device provided as part of the identification information. Or the serial number gets hashed and printed on the device as a barcode, and on the LAP server the hashed value obtained from the barcode and sent to the LAP server during pre-registration gets compared with the hashed value of the serial number received from the device over the network. (Hashed values cannot get decoded or "restored", even when knowing the algorithm, therefore the hashed value provided as a barcode and the device ID hashed by the LAP server can only be compared on the hashed level). Correspondingly, the identification information may, e.g., be spilt or distributed into the two parts according to device information and company information, or a hashed value combination as described above.

The disclosed method can be terminated if the provisioning and further registration of the device is not initiated by the device within a predetermined threshold amount of time after reception, at the LAP server, of the message that contains the identification information about the device and the information about the location of the device. The threshold amount of time can, for example, be one minute (1 min).

By "timing out" after a certain threshold amount of time, the security of the entire process can be improved. For example, if the operator is prevented from completing the registration and provisioning process after dispatching the message to the LAP server and/or its receipt at the LAP server for whatever reason (or simply forgets to do so), the device and the system are not left hanging in this intermediary and potentially vulnerable state, but the system is reset. Preferably, in such a case, the entire method can be initiated by the operator anew (the obtained identification information and/or location information about the device may potentially be reused in such a case, if it has not changed in the meantime). Also, "timing out" may help to ensure that the provided location information about the device is correct and up-to-date, particularly if the threshold amount of time is in the range of seconds or minutes, since it is impossible or at least very unlikely that in such a short amount of time the device is taken to a different location (intentionally, e.g. by an attacker, or unintentionally by mistake) after the message to the LAP server has been dispatched/received. A threshold amount of, e.g., 1 min is suitable in this regard since it is sufficiently short to avoid mistakes/attacks on the system, but not so short that repeated unintended aborts must be expected.

However, depending on circumstances, the threshold amount of time may also be 10 s, 20 s, 30 s, 45 s, 2 min, 5 min, 10 min, 15 min, 30 min, 45 min, or 1 h, to name just a few further concrete examples.

The method may also comprise taking a picture of the device with the mobile device of the operator, and providing the picture to the LAP server and/or to the fleet management server.

Taking a picture of the device is an easy and comfortable way of obtaining information about the device and its location and surroundings, facilitated by the fact that modern mobile devices may include high-quality photographic equipment and graphics processing capabilities.

The picture of the device can then be sent to and compared with one or more reference pictures by the LAP server and/or the fleet management server.

The picture can be sent to the serve in any suitable format (e.g., JPEG, PNG, and so forth), unencrypted or, preferably, in an encrypted manner, and it can be processed by known graphics processing methods (including machine learning methods and processes for picture recognition) at the server.

The comparison with the reference picture(s) can, for example, serve to determine the device type of the photographed device, but also more detailed comparisons can be made, e.g., to determine a model number or hardware specification (e.g., the type of input/output ports, etc.), or even to identify a single device (e.g., from a set of devices that are scheduled for installation on that day, week, month, etc., and pictures of which are stored on the respective server).

Particularly, where a device type of the device is determined based on the comparison of the picture of the device with the one or more reference pictures, the determined device type can be compared to the identification information about the device obtained in step 1b. and sent to the LAP server as part of the message in step 1d.) to assess correctness of the determined device type.

This can, on the one hand, help to validate the identification information received by the LAP server in the message in step 1d). On the other hand, it can also be used, for example, to check whether the installation of a device of the determined type is expected at or around the location specified by the information about the location of the device, all the while only requiring the operator to take a picture of the device. Both aspects may hence further increase the robustness and security of the procedure.

According to a second aspect of the invention, a system for the provisioning and registration of a device with an energy- or power system is provided.

The system may perform the provisioning and registration of the device with the energy/power system by using any of the embodiments and variants of the method as disclosed in this document.

The system may therefore comprise means, e.g. one or more processors and/or one or more memories storing instructions to be executed by the processor(s), that are adapted to perform the method according to any of the embodiments and variants of the method according to the first aspect of the present disclosure.

For example, in an embodiment, the system comprises a location-aware provisioning server (LAP server) and a fleet management server, wherein the LAP server is adapted for: receiving an authentication of an operator, receiving a message from the authenticated operator that contains identification information about the device and information about the location of the device, and pre-registering the device based on the information contained in the received message. The system is further adapted for performing provisioning of the device and further registration of the device with the energy- or power system.

The system can further comprise a mobile device operated by the operator.

With regard to further options, features and possible modifications of the disclosed system as well as the associated technical advantages, reference is made to the corresponding statements made above in connection with the method according to the first aspect of the disclosure, because those statements apply analogously to the presently discussed system according to the second aspect of the disclosure, and are thus not repeated again to avoid redundancies and to streamline the discussion.

According to a third aspect of the disclosure, a computer program is provided which comprises instructions which, when executed, cause a system according to the second aspect of the disclosure to perform a method according to the first aspect of the disclosure.

To summarize, according to certain aspects and features of the present disclosure, systems and methods for location-aware provisioning are provided which efficiently combine determining the device location with their zero-touch configuration, while adding a second layer of authentication to the registration and provisioning process.

That is, embodiments of the present disclosure provide the transmission of information about the device location to the system server and/or improved security- and authentication, which are becoming ever more important in the energy sector.

Possible embodiments of the present disclosure are described in more detail below with reference to the following figures:
- **Figs. 1a-1f:**: Method for provisioning and registration of a device with an energy- or power system according to certain embodiments of the present disclosure; and
- **Fig. 2:**: A system and method for the provisioning and registration of a device with an energy- or power system according to an embodiment of the present disclosure.

Possible embodiments of the different aspects of the present invention are described below. It is clear, however, that in the following only individual embodiments of the disclosure can be described in more detail. The skilled person will therefore understand that the options, features, and possible modifications described with reference to these specific embodiments may also be further modified and/or combined with one another in a different manner or in different sub-combinations, without departing from the scope of the present disclosure. Individual features or sub-features may also be omitted if they are dispensable to obtain the desired result. In order to avoid redundancies, reference is therefore made to the explanations in the preceding sections, particularly the part on the summary of the invention, which also apply to the following detailed description.

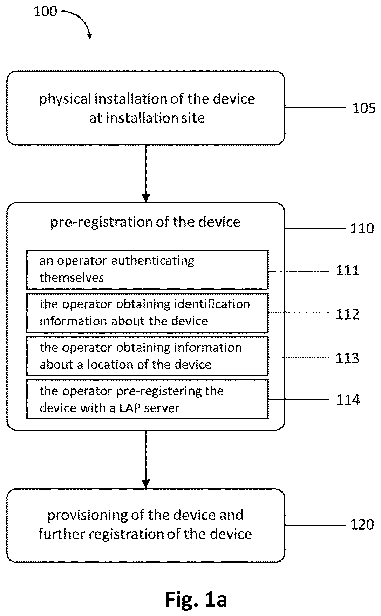

**Figs. 1a-1f** show a method for the provisioning and registration of a device with an energy- or power system along with some possible modifications of the method.

As already mentioned in the beginning, the device may, e.g., be or include an Intelligent Electronic Device (IED), an Internet-of-Things (IoT) Sensor; a non-intelligent asset or component like a circuit breaker, bushing, transformer, IGBT; a communication device like a modem, router, or gateway. The energy/power system may, e.g., be or include one or more substations, drives, control cubicles for protection and control, and the method may also have applications to communication and processes in the oil and gas industry, as well as applications in transportation, for example.

It is further pointed out that while the different steps of the method are depicted in a certain order in **Figs. 1a-1f****,** that order may also be changed, unless explicitly mentioned otherwise or a given step or feature depends on the presence or prior execution of another step.

**Fig. 1a** shows a method **100** of provisioning and registration of a device with an energy- or power system (not shown). The method **100** comprises, at step **110,** pre-registration of the device with the energy- or power system, and, at step **120,** provisioning of the device and further registration of the device with the energy- or power system.

Optionally, prior to or during pre-registration **110,** the method **100** may include physical installation **105** of the device at an installation site.

For pre-registration **110** of the device, an operator authenticates himself or herself with the energy- or power system, at step **111.** At step **112,** the operator obtains identification information about the device (e.g., by scanning a code on the device), and at step **113** the operator obtains information about a location of the device (e.g., by using the GPS capabilities of a mobile device carried by the operator whilst standing in close proximity to the device). The operator that pre-registers the device, at step **114,** with a location-aware provisioning server of the energy- or power system, wherein pre-registering the device with the LAP server comprises sending a message to the LAP server that contains the identification information about the device and the information about the location of the device. Pre-registration **110,** particularly performing steps **111** to **114,** may be done using a mobile device carried and operated by the operator, e.g., a mobile phone, a tablet, a laptop, or some such device. To perform the steps of pre-registration **110,** particularly steps **111** to **114,** a dedicated app running on the mobile device may be used and/or a browser running on the mobile device may be used to access a website/web application providing the necessary functionalities.

Step **113** of the operator obtaining information about a location of the device can further comprise obtaining information about a quality of the information about the location of the device and storing the information about the quality of the information about the location of the device. The information about the quality of the information about the location of the device can, for example, be stored in the form of: a color code indicating a low, medium, or high quality of the information about the location of the device, and/or a value in meters indicating an accuracy of the information about the location of the device. Alternatively or additionally, the information about the location of the device may use a location format that allows for a coordinate-to-address conversion that enables fine-grained filtering capabilities, particularly filtering for one or more of the following: street name, intersection, locality.

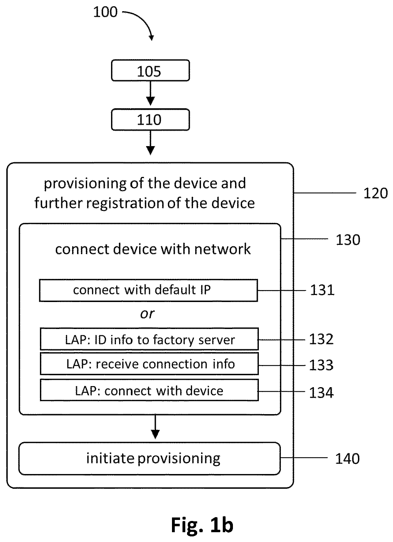

**Figs. 1b-1f** show possible variants of the method **100** of **Fig. 1a** and/or further optional details about individual steps of the method **100** that are shown in **Fig. 1a****.** Corresponding steps (or blocks of steps) are referred to by the same reference numeral throughout **Figs. 1a-1f****,** so statements made about a given step in the context of one figure may also apply to the corresponding step in the other figures, unless explicitly stated otherwise or ruled out technically or by some law of nature.

It is pointed out that the operator's mobile device mentioned above may also participate in the further optional steps of the method **100** that will now be discussed.

**Figs. 1b** to **1f** illustrates further possible details about the provisioning and further registration of the device in step **120.**

The provisioning and further registration **120** of the device may comprise connecting the device with a network, see step **130,** and initiating, by the device, the provisioning of the device through the LAP server, see step **140.**

As illustrated in **Fig. 1b****,** connecting the device with the network at step **130** may comprise establishing a connection of the device with a default IP-address (see step **131),** or it may comprise the LAP server providing the identification information about the device to a factory server of a manufacturer of the device (see step **132),** the LAP server receiving in response thereto connection information for the device from the factory server (see step **133),** and the LAP server establishing a connection with the device using the connection information received from the factory server (see step **134).**

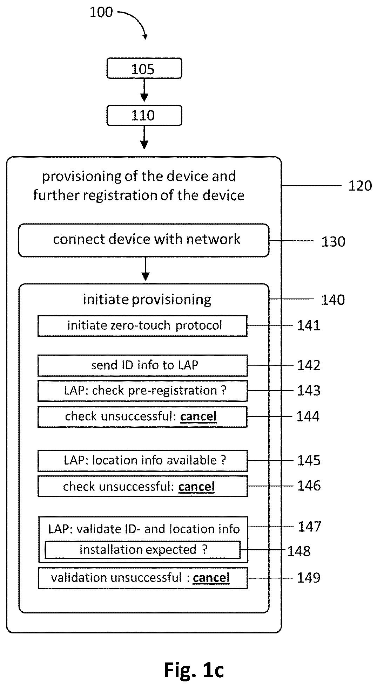

As illustrated in **Fig. 1c****,** initiating the provisioning at step **140** may involve initiating a zero-touch provisioning protocol on the LAP server (see step **141).** Alternatively or additionally, initiating the provisioning **140** may comprise sending, by the device, identification information about itself to the LAP server via the network (see step **142),** checking, by the LAP server, whether the device has already been pre-registered by an authorized operator (see step **143),** and if the device has not been pre-registered by an authorized operator, cancelling the provisioning of the device (see step **144).** Alternatively or additionally, initiating the provisioning **140** may further comprise checking, by the LAP server, whether information about the location of the device is available (see step **145),** and, if no information about the location of the device is available, cancelling the provisioning of the device (see step **146).** Further yet, initiating the provisioning **140** may alternatively or additionally comprises validating, by the LAP server via a fleet management server, that the identification information about the device and the information about the location of the device are valid (see step **147),** wherein the validating may preferably involve verifying that an installation of a device of the given type is expected at the site specified by the information about the location of the device (see step **148).** If the validation fails, the provisioning of the device may be cancelled (see step **149).**

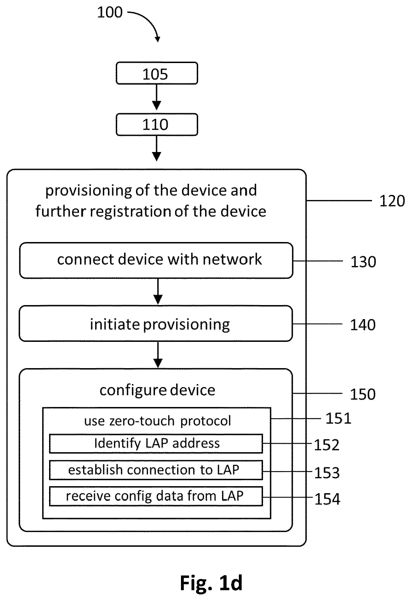

As shown in **Fig. 1d**, once the initiating has been successful and not been cancelled, the provisioning and further registration at step **120** may further comprise configuring, by the LAP server, the device (see step **150),** particularly configuring the device using the zero-touch provisioning protocol (see step **151).** The zero-touch provisioning protocol **151** may comprise identifying an address of the LAP server (see step **152),** establishing a connection between the device and the LAP server (see step **152),** and receiving, by the device, configuration data from the LAP server (see step **153).** For a zero-touch protocol, steps **152** to **154** are performed automatically without human intervention.

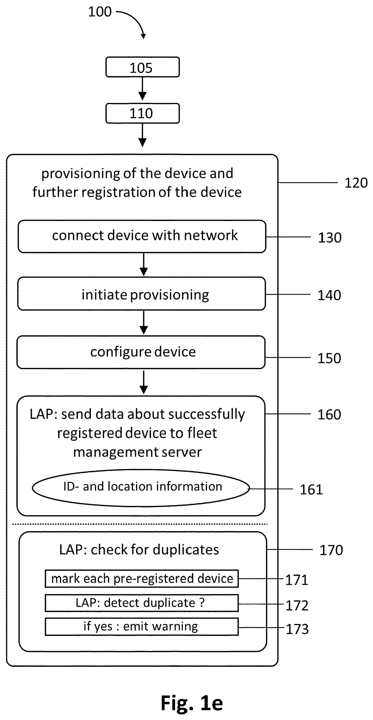

As shown in **Fig. 1e**, the further registration of the device with the energy- or power system at step **120** may alternatively or additionally comprise sending, by the LAP server, data about the successfully registered device and its location to a fleet management server, see step **160.** Preferably, the data sent to the fleet management server includes at least the identification information and the information about the location of the device (see reference numeral **161).**

As yet another option that is also shown in **Fig. 1e** (see step **170),** the provisioning and further registration of the device with the energy- or power system at step **120** may alternatively or additionally comprise the LAP server marking each pre-registered device that was already successfully configured using the zero-touch provisioning protocol (see step **171),** the LAP server detecting that a new device uses the same identification information as an already-configured device (see step **172),** and the LAP server emitting a warning in response to the detecting that the new device uses the same identification information as an already-configured device (see step **173).**

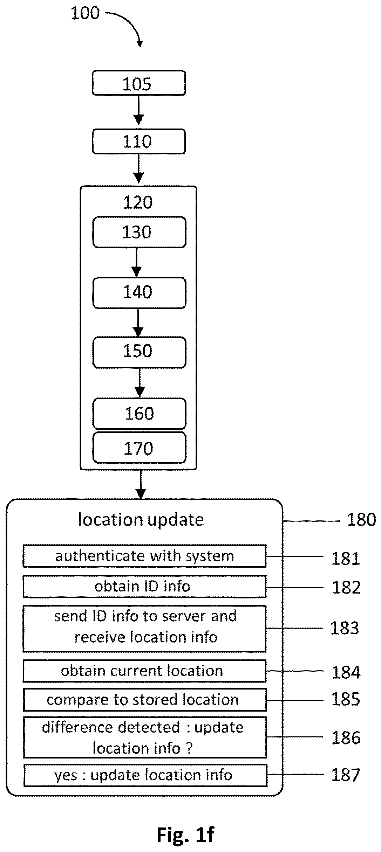

As shown in **Fig. 1f****,** the method **100** may further comprise, after successful registration of the device with the energy- or power system, an updating procedure **180** regarding the stored location information of the device, which may comprise the steps of a person authenticating themselves with the energy- or power system via a mobile device of the person (see step 181), particularly by using a mobile app running on the mobile device of the person and/or a web application accessed via the mobile device of the person, obtaining, by using the mobile device of the person, the identification information about the device, preferably by scanning the code on the device (see step **182),** sending, by the mobile device of the person, the identification information to the LAP server and/or the fleet management server, and receiving in response thereto stored information about the location of the device (see step **183),** obtaining, by using the mobile device of the person, up-to-date information about a current location of the device (see step **184),** comparing the up-to-date information about the current location of the device with the obtained stored information about the location of the device (see step **185),** in response to the comparison yielding a difference above a threshold value, prompting the person to indicate whether the stored information about the location of the device shall be updated (see step **186),** and if the indication is that the information shall be updated, updating the stored information about the location of the device with the up-to-date information about the current location of the device (see step **187).**

Alternatively or in addition to any of the above, the method **100** may also comprise taking a picture of the device with the mobile device of the operator and providing the picture to the LAP server and/or to the fleet management server. The picture of the device may then be compared with one or more reference pictures by the LAP server and/or the fleet management server. A device type of the device can thus be determined based on the comparison of the picture of the device with the one or more reference pictures, and the determined device type can be compared to the identification information about the device obtained in step **112** to assess correctness of the determined device type.

According to another option, the identification information about the device can be divided into two parts, wherein a first part of the identification information is provided to the LAP server at step **114** during pre-registration in the message to the LAP server that contains the identification information about the device and the information about the location of the device, while a second part of the identification information is provided to the LAP server by the device via the network at step **142** when initiating the provisioning. Provisioning and configuration of the device, steps **140** and **150,** only proceed when the two parts match.

Alternatively or additionally, the method **100** can be terminated if the provisioning and further registration of the device, step **120,** is not initiated by the device within a threshold amount of time after reception at the LAP server of the message that contains the identification information about the device and the information about the location of the device at step **114.** The threshold amount of time can for example be set to one minute.

The method **100** as described above can be provided "as-a-service" on existing infrastructure. The method **100** can, in particular, be applied to an energy- or power system that comprises a large number of devices, preferably at least **100** devices, more preferably at least **1000** devices.

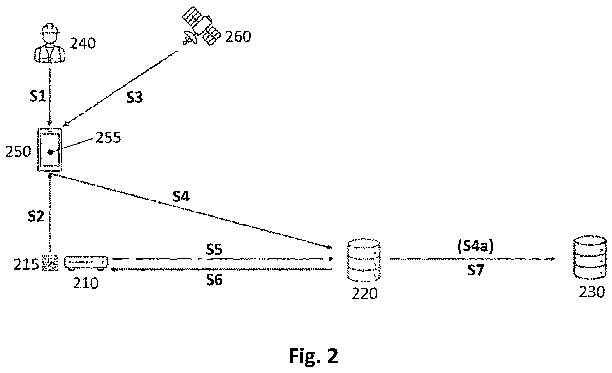

The method **100** may be implemented as a computer program comprising instructions which, when executed by one or more processors of a suitably adapted registration and provisioning system (see, e.g., the discussion regarding **Fig. 2** that follows below), cause the corresponding components of the registration and provisioning system to perform the steps of the method **100.**

**Fig. 2** illustrates a system and method for the provisioning and registration of a device with an energy- or power system. It is pointed out that the energy/power system itself is not shown in the schematic illustration of **Fig. 2****.**

The following agents, items, and components are shown in **Fig. 2****:**
The device **210** currently being installed in the energy- or power system. The device **210** carries a code, in the case shown here a QR code **215,** which encapsulates identification information about the device and/or leads to an information source (e.g., a URL leading to a website) that provides such information.

An engineer, or operator **240,** who installs the device on-site.

A mobile device **250** (e.g., a mobile phone, a tablet, a laptop, etc.) handled and operated by the operator **210.** On the mobile device **250,** a mobile application **255** is running (e.g., a dedicated app and/or a web browser), capable of authenticating the operator **210** (e.g., using fingerprint, face recognition, secret key, username and password, two-factor-authorization-methods, etc.), to obtain the current location (e.g., via GPS, indicated by reference numeral **260),** to scan/obtain the code **215** of the device **210,** and to connect and transmit data to the LAP server **220.**

A location-aware provisioning (LAP) server **220,** capable of handling the pre-registration of devices like device **210,** of checking whether a device is pre-registered based on its identification information and/or location information, of handling provisioning, particularly using zero-touch provisioning protocol(s), and of transmitting data about registered devices and their location to the fleet management server **230.** The location-aware provisioning functionality can be offered "as-a-service" and can run on servers already present at the customer site.

A fleet management server **230,** capable of checking whether a pre-registered device is in a valid location and storing information about successfully registered devices and their location.

Based on these agents, items, and components, registration and provisioning of the device **210** with the energy-and power system may proceed as follows, for example:
The operator **240** who installs the device **210** on-site authenticates himself or herself by using the mobile application/browser **255** running on the mobile device **250,** see step **S1.** Any secure authentication method is suitable, e.g., one of the options mentioned herein.

Next, the operator **240** scans with the mobile device **250** the code **215** of the device **210,** thus obtaining identification information about the device **210,** preferably a unique identification code, see step **S2.**

Prior, during, or after that, the mobile device **250** and/or the mobile app **255** acquires location information based, e.g., on a GPS signal **260,** optionally together with the quality of the location signal (e.g., the quality of the GPS signal), see step **S3.** This quality of the location information can also be stored in a database, e.g., in the form of a color code (e.g., low, medium, high). The database can, e.g., be hosted on the LAP server **220** and/or the fleet management server **230.**

The operator **240** then pre-registers the device **210** with the LAP server **220,** using the mobile device **250,** particularly the mobile app/browser **255,** see step **S4.** To this end, the mobile device **250** sends a message to the LAP server **220** containing the identification information about the device **210** and the information about the location of the device **210,** which can be taken as the location of the mobile device **250** handled by the operator **240,** because it is assumed that the operator **240** (and thus their mobile device **250)** is in close proximity to the device **210** whilst installing and (pre-)registering the device **210** in the energy- or power system.

Optionally, at this point, the LAP server **220** may validate via the fleet management server **230** that the pre-registration data (identification- and location information) is valid (e.g., the installation of a new device of this type is expected at that specific site location), see step **S4a.**

After the device **210** is installed, pre-registered, and connected to the network, it initiates a protocol, preferably a zero-touch protocol, to (permanently) connect to the LAP server **220** (and/or the fleet management server **230),** see step **S5.** During the protocol, the device **210** sends to the LAP server **220** identification information about itself, preferably including a unique identification code. Then, the LAP server **220** checks in its database (or a remote database it has access to) whether this device has already been successfully pre-registered by an authorized operator.

If the check if successful, the LAP server **220** proceeds to configure the device **210** via the provisioning protocol, see step **S6.** The configuration of the device in this case can also depend on the location of the device. However, if the check fails, i.e., it turns out that the device **210** has not be successfully pre-registered, then the provisioning protocol halts and the LAP server **220** emits a warning message that a device without pre-registration attempted to connect to the network. Importantly, this integration is compatible and can be integrated also with types of provisioning different from zero-touch provisioning.

If successfully provisioned, the LAP server **220** registers the device **210** in a fleet management database hosted on the fleet management server **230,** see step **S7.** For the location format, it is possible to use a coordinate-to-address conversion that enables the device administrators and owners to have fine-grained filtering capabilities (e.g., by street name, intersection, locality).

After the device **210** has thus been successfully provisioned and registered, an engineer having authenticated themselves with the system (not necessarily the same person as the operator **240** performing the above-described registration and provisioning process) can locally scan the code **215** at any time, and the fleet information associated with the device **210** can be sent to the mobile device of the engineer (the information may, e.g., be (automatically) retrieved by the app **255** or application running in the browser **255** of the mobile device **250** from the fleet management server **230).** In that moment, the current location, which can, e.g., be determined/obtained by the engineer using their mobile device whilst being in close proximity to the device **210,** gets compared with the originally stored location acquired by the operator **240** at step **S3** and transmitted to the LAP server **220** at step **S4.** If the stored location is out of a certain tolerance, the engineer will be asked if the location should be updated. With this method, the quality of location information is continuously improved.

To further improve the security of the method, the LAP server **220** may further mark each pre-registered device that was already successfully configured, particularly configured using a zero-touch protocol, and the LAP server **220** may detect and emit warnings if a new device uses the same identification information / unique identification code as an already-configured device.

The identification information about the device **210** can also be split into two parts which are then combined on server site, e.g., at the LAP server **220** (and/or at the fleet management server **230),** particularly in case a unique identification code is used as (part of) the identification information. A matching code will enable the provisioning to commence, e.g., will enable the zero-touch configuration download.

An alternative method is that the identification information, particularly a unique identification code, is sent to the LAP server **220** as before by the mobile device **250 /** mobile app **255.** However, that information/code is then forwarded to a server (not shown in **Fig. 2****)** of the company that produced the device **210 for** registration. Next, the server of the producer company sends back connection information to the LAP server **220** and/or the fleet management server **230.** Now, the respective server **220 / 230** can reach the device remotely. This method will not require the connection of the device **210** to the LAP server **220** and/or the fleet management server **230** in the first place, because the initial communication is performed between the mobile device **250** and the server **220** / **230,** not between the device **210** and the server **220 / 230.**

To avoid a pre-registration in advance at a different location, the provisioning- and registration window, particularly the matching function (if used), can expire in a predefined period after successful pre-registration (e.g., 1 minute). That is, in case the device does not start the provisioning- and registration process in the network in due time after pre-registration, the procedure needs to be redone.

## Claims

1. A method (100) of provisioning and registration of a device (210) with an energy- or power system, the method comprising:
pre-registration (110) of the device with the energy- or power system, and
provisioning (120) of the device and further registration of the device with the energy- or power system;
wherein pre-registration of the device with the energy- or power system comprises the steps of:
1a. an operator (240) authenticating (111) themselves with the energy- or power system,
1b. the operator obtaining (112) identification information about the device,
1c. the operator obtaining (113) information about a location of the device, and
1d. the operator pre-registering (114) the device with a location-aware provisioning server (220), LAP server, of the energy- or power system, wherein pre-registering the device with the LAP server comprises sending a message to the LAP server that contains the identification information about the device and the location of the device.

2. The method of claim 1, wherein steps 1a. to 1d. of the pre-registration are performed using a mobile device (250) of the operator.

3. The method of claim 1 or 2, wherein provisioning of the device and further registration of the device with the energy- or power system comprises the steps of:
connecting (130) the device with a network; and
initiating (140), by the device, the provisioning of the device through the LAP server.

4. The method of claim 3, wherein connecting the device with the network comprises:
the LAP server providing (132) the identification information about the device to a factory server of a manufacturer of the device;
the LAP server receiving (133) in response thereto connection information for the device from the factory server; and
the LAP server establishing a connection (134) with the device using the connection information received from the factory server.

5. The method of claim 3 or 4, wherein initiating the provisioning comprises:
sending (142), by the device, identification information about itself to the LAP server via the network;
checking (143), by the LAP server, whether the device has already been pre-registered by an authorized operator; and
if the device has not been pre-registered by an authorized operator, cancelling (144) the provisioning of the device.

6. The method of claim 5, wherein initiating the provisioning further comprises:
checking (145), by the LAP server, whether information about the location of the device is available; and
if no information about the location of the device is available, cancelling (146) the provisioning of the device.

7. The method of claim 6,
wherein initiating the provisioning further comprises validating (147), by the LAP server via a fleet management server (230), that the identification information about the device and the information about the location of the device are valid; and
if the validation fails, cancelling (149) the provisioning of the device.

8. The method of any one of the preceding claims, wherein step 1c. of the operator obtaining information about a location of the device further comprises:
obtaining information about a quality of the information about the location of the device; and
storing the information about the quality of the information about the location of the device.

9. The method of any one of the preceding claims, further comprising:
the LAP server marking (171) each pre-registered device that was already successfully configured using the zero-touch provisioning protocol;
the LAP server detecting (172) that a new device uses the same identification information as an already-configured device; and
the LAP server emitting (173) a warning in response to the detecting that the new device uses the same identification information as an already-configured device.

10. The method of any one of the preceding claims, further comprising, after successful registration of the device with the energy- or power system, the steps of:
a person authenticating themselves (181) with the energy- or power system via a mobile device of the person;
obtaining (182), by using the mobile device of the person, the identification information about the device;
sending (183), by the mobile device of the person, the identification information to the LAP server and/or the fleet management server, and receiving in response thereto stored information about the location of the device;
obtaining (184), by using the mobile device of the person, up-to-date information about a current location of the device;
comparing (185) the up-to-date information about the current location of the device with the obtained stored information about the location of the device;
in response to the comparison yielding a difference above a threshold value, prompting (186) the person to indicate whether the stored information about the location of the device shall be updated; and
if the indication is that the information shall be updated, updating (187) the stored information about the location of the device with the up-to-date information about the current location of the device.

11. The method on any one of claims 3 to 10,
wherein the identification information about the device is divided into two parts,
wherein a first part of the identification information is provided to the LAP server during pre-registration in the message to the LAP server that contains the identification information about the device and the location of the device,
wherein a second part of the identification information is provided to the LAP server by the device via the network during initiating the provisioning, and
wherein the provisioning of the device only proceeds when the two parts match.

12. The method of any one of the preceding claims,
wherein the method is terminated if the provisioning and further registration of the device is not initiated by the device within a threshold amount of time after reception at the LAP server of the message that contains the identification information about the device and the location of the device.

13. The method of any one of claims 2 to 12, further comprising:
taking a picture of the device with the mobile device of the operator, and
providing the picture to the LAP server and/or to the fleet management server,
wherein the picture of the device is compared with one or more reference pictures by the LAP server and/or the fleet management server.

14. System (200) for the provisioning and registration of a device (210) with an energy- or power system, the system comprising means that are adapted to perform the method according to any one of claims 1 to 13.

15. Computer program comprising instructions which, when executed, cause the system of claim 14 to perform the method according to any one of claims 1 to 13.

## Patentansprüche

1. Ein Verfahren (100) zum Bereitstellen und Registrieren einer Vorrichtung (210) bei einem Energie- oder Stromversorgungssystem, wobei das Verfahren Folgendes umfasst:
Vorregistrierung (110) der Vorrichtung mit dem Energie- oder Stromversorgungssystem, und
Bereitstellen (120) der Vorrichtung und weitere Registrierung der Vorrichtung bei dem Energie- oder Stromversorgungssystem;
wobei die Vorregistrierung der Vorrichtung mit dem Energie- oder Stromversorgungssystem die folgenden Schritte umfasst:
1a. ein Betreiber (240) authentifiziert (111) sich selbst beim Energie- oder Stromversorgungssystem,
1b. der Betreiber erhält (112) Identifikationsinformationen über die Vorrichtung,
1c. der Betreiber erhält (113) Informationen über einen Standort der Vorrichtung, und
1d. der Betreiber registriert (114) die Vorrichtung bei einem standortbewussten Bereitstellungsserver (220), LAP-Server, des Energie- oder Stromversorgungssystems vor, wobei das Vorregistrieren der Vorrichtung bei dem LAP-Server das Senden einer Nachricht an den LAP-Server umfasst, die die Identifikationsinformationen über die Vorrichtung und den Standort der Vorrichtung enthält.

2. Das Verfahren nach Anspruch 1, wobei die Schritte 1a. bis 1d. der Vorregistrierung unter Verwendung einer Mobilvorrichtung (250) des Betreibers durchgeführt werden.

3. Das Verfahren nach Anspruch 1 oder 2, wobei das Bereitstellen der Vorrichtung und weitere Registrierung der Vorrichtung bei dem Energie- oder Stromversorgungssystem die folgenden Schritte umfasst:
Verbinden (130) der Vorrichtung mit einem Netzwerk; und
Initiieren (140), durch die Vorrichtung, der Bereitstellung der Vorrichtung durch den LAP-Server.

4. Das Verfahren nach Anspruch 3, wobei das Verbinden der Vorrichtung mit dem Netzwerk Folgendes umfasst:
der LAP-Server stellt die Identifikationsinformationen über die Vorrichtung einem Werksserver eines Herstellers der Vorrichtung bereit (132);
der LAP-Server empfängt (133) als Reaktion darauf Verbindungsinformationen für die Vorrichtung vom Werksserver; und
der LAP-Server baut unter Verwendung der vom Werksserver empfangenen Verbindungsinformationen eine Verbindung (134) mit der Vorrichtung auf.

5. Das Verfahren nach Anspruch 3 oder 4, wobei das Initiieren der Bereitstellung Folgendes umfasst:
Senden (142), durch die Vorrichtung, von Identifikationsinformationen über sich selbst an den LAP-Server über das Netzwerk;
Prüfen (143), durch den LAP-Server, ob die Vorrichtung bereits von einem autorisierten Betreiber vorregistriert wurde; und
wenn die Vorrichtung nicht von einem autorisierten Betreiber vorregistriert wurde, Abbrechen (144) der Bereitstellung der Vorrichtung.

6. Das Verfahren nach Anspruch 5, wobei das Initiieren der Bereitstellung ferner Folgendes umfasst:
Prüfen (145), durch den LAP-Server, ob Informationen über den Standort der Vorrichtung verfügbar sind; und
wenn keine Informationen über den Standort der Vorrichtung verfügbar sind, Abbrechen (146) der Bereitstellung der Vorrichtung.

7. Das Verfahren nach Anspruch 6,
wobei das Initiieren der Bereitstellung ferner Validieren (147) durch den LAP-Server über einen Flottenmanagementserver (230) umfasst, dass die Identifikationsinformationen über die Vorrichtung und die Informationen über den Standort der Vorrichtung gültig sind; und
wenn die Validierung fehlschlägt, Abbrechen (149) der Bereitstellung der Vorrichtung.

8. Das Verfahren nach einem der vorhergehenden Ansprüche, wobei Schritt 1c. des Erhaltens von Informationen über einen Standort der Vorrichtung durch den Betreiber ferner Folgendes umfasst:
Erhalten von Informationen über eine Qualität der Informationen über den Standort der Vorrichtung; und
Speichern der Informationen über die Qualität der Informationen über den Standort der Vorrichtung.

9. Das Verfahren nach einem der vorhergehenden Ansprüche, das ferner Folgendes umfasst:
der LAP-Server markiert (171) jede vorregistrierte Vorrichtung, die bereits erfolgreich unter Verwendung des Zero-Touch-Bereitstellungsprotokolls konfiguriert wurde;
der LAP-Server detektiert (172), dass eine neue Vorrichtung die gleichen Identifikationsinformationen wie eine bereits konfigurierte Vorrichtung verwendet; und
der LAP-Server gibt eine Warnung als Reaktion auf das Detektieren, dass die neue Vorrichtung die gleichen Identifikationsinformationen wie eine bereits konfigurierte Vorrichtung verwendet, aus (173).

10. Das Verfahren nach einem der vorhergehenden Ansprüche, das ferner nach erfolgreicher Registrierung der Vorrichtung bei dem Energie- oder Stromversorgungssystem die folgenden Schritte umfasst:
eine Person authentifiziert (181) sich bei dem Energie- oder Stromversorgungssystem über eine Mobilvorrichtung der Person;
Erhalten (182), unter Verwendung der Mobilvorrichtung der Person, der Identifikationsinformationen über die Vorrichtung;
Senden (183), durch die Mobilvorrichtung der Person, der Identifikationsinformationen an den LAP-Server und/oder den Flottenmanagementserver, und, als Reaktion darauf, Empfangen von gespeicherten Informationen über den Standort der Vorrichtung;
Erhalten (184), unter Verwendung der Mobilvorrichtung der Person, von aktuellen Informationen über einen aktuellen Standort der Vorrichtung;
Vergleichen (185) der aktuellen Informationen über den aktuellen Standort der Vorrichtung mit den erhaltenen gespeicherten Informationen über den Standort der Vorrichtung;
als Reaktion darauf, dass der Vergleich eine Differenz über einem Schwellenwert ergibt, Auffordern (186) der Person, anzugeben, ob die gespeicherten Informationen über den Standort der Vorrichtung aktualisiert werden sollen; und
wenn die Angabe daraus besteht, dass die Informationen aktualisiert werden sollen, Aktualisieren (187) der gespeicherten Informationen über den Standort der Vorrichtung mit den aktuellen Informationen über den aktuellen Standort der Vorrichtung.

11. Das Verfahren nach einem der Ansprüche 3 bis 10,
wobei die Identifikationsinformationen über die Vorrichtung in zwei Teile unterteilt sind,
wobei ein erster Teil der Identifikationsinformationen dem LAP-Server während einer Vorregistrierung in der Nachricht an den LAP-Server bereitgestellt wird, die die Identifikationsinformationen über die Vorrichtung und den Ort der Vorrichtung enthält,
wobei ein zweiter Teil der Identifikationsinformationen dem LAP-Server durch die Vorrichtung über das Netzwerk während des Initiierens der Bereitstellung bereitgestellt wird, und
wobei das Bereitstellen der Vorrichtung nur dann erfolgt, wenn die zwei Teile übereinstimmen.

12. Das Verfahren nach einem der vorhergehenden Ansprüche,
wobei das Verfahren beendet wird, wenn die Bereitstellung und weitere Registrierung der Vorrichtung nicht innerhalb einer Schwellenzeitdauer nach dem Empfang der Nachricht, die die Identifikationsinformationen über die Vorrichtung und den Standort der Vorrichtung enthält, an dem LAP-Server initiiert wird.

13. Das Verfahren nach einem der Ansprüche 2 bis 12, das ferner Folgendes umfasst:
Aufnehmen eines Bilds der Vorrichtung mit der Mobilvorrichtung des Betreibers, und
Bereitstellen des Bildes für den LAP-Server und/oder den Flottenmanagementserver,
wobei das Bild der Vorrichtung durch den LAP-Server und/oder den Flottenmanagementserver mit einem oder mehreren Referenzbildern verglichen wird.

14. System (200) zur Bereitstellung und Registrierung einer Vorrichtung (210) bei einem Energie- oder Stromversorgungssystem, wobei das System Mittel umfasst, die dazu ausgelegt sind, das Verfahren nach einem der Ansprüche 1 bis 13 durchzuführen.

15. Computerprogramm, das Anweisungen umfasst, die, wenn sie ausgeführt werden, das System nach Anspruch 14 zu veranlassen, das Verfahren nach einem der Ansprüche 1 bis 13 durchzuführen.

## Revendications

1. Un procédé (100) de provisionnement et d'enregistrement d'un dispositif (210) auprès d'un système d'énergie ou de puissance, le procédé comprenant :
le préenregistrement (110) du dispositif auprès du système d'énergie ou de puissance, et
le provisionnement (120) du dispositif et l'enregistrement ultérieur du dispositif auprès du système d'énergie ou de puissance ;
le préenregistrement du dispositif auprès du système d'énergie ou de puissance comprenant les étapes suivantes :
1a. l'authentification (111) d'un opérateur (240) de lui-même, auprès du système d'énergie ou de puissance,
1b. l'obtention (112), par l'opérateur, d'informations d'identification concernant le dispositif,
1c. l'obtention (113), par l'opérateur, d'informations concernant une localisation du dispositif, et
1d. le préenregistrement (114), par l'opérateur, du dispositif auprès d'un serveur de provisionnement tenant compte de la localisation (220), désigné serveur LAP, du système d'énergie ou de puissance, le préenregistrement du dispositif auprès du serveur LAP comprenant l'envoi d'un message au serveur LAP qui contient les informations d'identification concernant le dispositif et la localisation du dispositif.

2. Le procédé selon la revendication 1, dans lequel les étapes la. à 1d. du préenregistrement sont réalisées au moyen d'un dispositif mobile (250) de l'opérateur.

3. Le procédé selon la revendication 1 ou 2, dans lequel le provisionnement du dispositif et l'enregistrement ultérieur du dispositif auprès du système d'énergie ou de puissance comprennent les étapes suivantes :
la connexion (130) du dispositif à un réseau ; et
l'initiation (140), par le dispositif, du provisionnement du dispositif via le serveur LAP.

4. Le procédé selon la revendication 3, dans lequel la connexion du dispositif au réseau comprend :
la fourniture (132), par le serveur LAP, des informations d'identification concernant le dispositif à un serveur d'usine d'un fabricant du dispositif ;
la réception (133) en retour, par le serveur LAP, d'informations de connexion pour le dispositif en provenance du serveur d'usine ; et
l'établissement d'une connexion (134), par le serveur LAP, avec le dispositif au moyen des informations de connexion reçues en provenance du serveur d'usine.

5. Le procédé selon la revendication 3 ou 4, dans lequel l'initiation du provisionnement comprend :
l'envoi (142), par le dispositif, d'informations d'identification le concernant au serveur LAP via le réseau ;
la vérification (143), par le serveur LAP, si le dispositif a déjà été préenregistré par un opérateur autorisé ; et
si le dispositif n'a pas été préenregistré par un opérateur autorisé, l'annulation (144) du provisionnement du dispositif.

6. Le procédé selon la revendication 5, dans lequel l'initiation du provisionnement comprend en outre :
la vérification (145), par le serveur LAP, si des informations concernant la localisation du dispositif sont disponibles ; et
si aucune information concernant la localisation du dispositif n'est disponible, l'annulation (146) du provisionnement du dispositif.

7. Le procédé selon la revendication 6,
dans lequel l'initiation du provisionnement comprend en outre la validation (147), par le serveur LAP via un serveur de gestion de flotte (230), que les informations d'identification concernant le dispositif et les informations concernant la localisation du dispositif sont valides ; et
en cas d'échec de la validation, l'annulation (149) du provisionnement du dispositif.

8. Le procédé selon l'une quelconque des revendications précédentes, dans lequel l'étape 1c. d'obtention, par l'opérateur, d'informations concernant une localisation du dispositif comprend en outre :
l'obtention d'informations concernant une qualité des informations concernant la localisation du dispositif ; et
le stockage des informations concernant la qualité des informations concernant la localisation du dispositif.

9. Le procédé selon l'une quelconque des revendications précédentes, comprenant en outre :
le marquage (171), par le serveur LAP, de chaque dispositif préenregistré qui a déjà été configuré avec succès au moyen du protocole de provisionnement sans intervention ;
la détection (172), par le serveur LAP, qu'un nouveau dispositif utilise les mêmes informations d'identification qu'un dispositif déjà configuré ; et
l'émission (173), par le serveur LAP, d'un avertissement en réponse à la détection que le nouveau dispositif utilise les mêmes informations d'identification qu'un dispositif déjà configuré.

10. Le procédé selon l'une quelconque des revendications précédentes, comprenant en outre, après un enregistrement avec succès du dispositif auprès du système d'énergie ou de puissance, les étapes suivantes :
l'authentification (181) d'une personne d'elle-même auprès du système d'énergie ou de puissance via un dispositif mobile de la personne ;
l'obtention (182), au moyen du dispositif mobile de la personne, des informations d'identification concernant le dispositif ;
l'envoi (183), par le dispositif mobile de la personne, des informations d'identification au serveur LAP et/ou au serveur de gestion de flotte, et la réception en retour d'informations stockées concernant la localisation du dispositif ;
l'obtention (184), au moyen du dispositif mobile de la personne, d'informations à jour concernant une localisation actuelle du dispositif ;
la comparaison (185) des informations à jour concernant la localisation actuelle du dispositif avec les informations stockées obtenues concernant la localisation du dispositif ;
dans le cas où la comparaison met en évidence une différence supérieure à une valeur seuil, l'invitation (186) faite à la personne d'indiquer si les informations stockées concernant la localisation du dispositif doivent être mises à jour ou non ; et
si l'indication est que les informations doivent être mises à jour, la mise à jour (187) des informations stockées concernant la localisation du dispositif avec les informations à jour concernant la localisation actuelle du dispositif.

11. Le procédé selon l'une quelconque des revendications 3 à 10,
dans lequel les informations d'identification concernant le dispositif sont divisées en deux parties,
dans lequel une première partie des informations d'identification est fournie au serveur LAP pendant le préenregistrement dans le message adressé au serveur LAP qui contient les informations d'identification concernant le dispositif et la localisation du dispositif,
dans lequel une deuxième partie des informations d'identification est fournie au serveur LAP par le dispositif via le réseau pendant l'initiation du provisionnement, et
dans lequel le provisionnement du dispositif ne se poursuit que lorsque les deux parties concordent.

12. Le procédé selon l'une quelconque des revendications précédentes,
le procédé prenant fin si le provisionnement et l'enregistrement ultérieur du dispositif ne sont pas initiés par le dispositif dans un laps de temps seuil qui suit la réception, au niveau du serveur LAP, du message qui contient les informations d'identification concernant le dispositif et la localisation du dispositif.

13. Le procédé selon l'une quelconque des revendications 2 à 12, comprenant en outre :
la prise d'une photo du dispositif avec le dispositif mobile de l'opérateur, et
la fourniture de la photo au serveur LAP et/ou au serveur de gestion de flotte,
dans lequel la photo du dispositif est comparée avec une ou plusieurs photos de référence par le serveur LAP et/ou le serveur de gestion de flotte.

14. Système (200) de provisionnement et d'enregistrement d'un dispositif (210) auprès d'un système d'énergie ou de puissance, le système comprenant des moyens adaptés à réaliser le procédé selon l'une quelconque des revendications 1 à 13.

15. Programme informatique comprenant des instructions qui, lorsqu'elles sont exécutées, amènent le système selon la revendication 14 à réaliser le procédé selon l'une quelconque des revendications 1 à 13.
